# EUROPEAN PATENT SPECIFICATION

(11) **EP 3 199 376 B1**
(45) Date of publication and mention of the grant of the patent: **10.07.2019**
(21) Application number: 15844387.9
(22) Date of filing: 25.09.2015
(51) Int. Cl.: B60C 11/16, B60C 19/00, B29D 30/66

(54) **STUD PIN DRIVING APPARATUS AND METHOD FOR MANUFACTURING STUDDED TIRE**
SPIKESTIFTTREIBVORRICHTUNG UND VERFAHREN ZUR HERSTELLUNG VON SPIKEREIFEN
APPAREIL D'ENTRAÎNEMENT DE CLOUS ET PROCÉDÉ DE FABRICATION DE PNEU CLOUTÉ

(30) Priority: 26.09.2014 JP 2014196472
(43) Date of publication of application: 02.08.2017
(73) Proprietor: The Yokohama Rubber Co., Ltd., Minato-ku Tokyo 105-8685 (JP)
(72) Inventor: TADA Hirotaro, Hiratsuka-shi Kanagawa 254-8601 (JP)
(74) Representative: Dilg, Haeusler, Schindelmann Patentanwaltsgesellschaft mbH
(86) International application number: PCT/JP2015/077118
(87) International publication number: WO 2016/047759

(56) References cited:
- JP-A- S5 795 203
- JP-A- S6 338 008
- JP-A- S6 338 008
- JP-A- S61 110 606
- JP-A- S61 110 606

## Description

### Technical Field

The present invention relates to an insertion device for inserting stud pins into a stud pin insertion hole provided in a tread portion of a tire and a method of manufacturing a studded tire.

### Background Art

Conventional snow tires provide grip on icy road surfaces via stud pins fitted into the tread portion of the tire.
Typical stud pins are inserted into stud pin installation holes provided in the tread portion. A stud gun is used to expand the diameter of the stud pin installation hole and then to insert the stud pin into the stud pin installation hole. This firmly embeds the stud pin into the stud pin installation hole.

Additionally, an insertion device for inserting stud pins into a tire is known (for example, see US Patent No. 3487527). This insertion device includes a rotation mechanism for supporting and rotating a tire to which stud pins are attached, a drill unit for forming stud pin insertion holes in the tire, and a stud pin insertion unit. Stud pins are inserted into the tire while the tire is rotated by the rotation mechanism so as to change the position of the tire in the circumferential direction and while adjusting the position of the insertion unit in the tire width direction.

### Summary of Invention

### Technical Problem

To insert stud pins into pre-formed stud pin insertion holes, the position of the stud pin insertion holes for each kind of tire needs to be entered beforehand, and creation of recipe data for causing the insertion device to perform insertion, i.e. teaching, must be performed.
Teaching involves creating a recipe data by making the insertion device actually perform an insertion operation, and recording this operation so that the recorded operation can be reperformed. As such, teaching takes time and there is also the problem in that the insertion device cannot be used during the teaching operation.

JP S63 38008 A discloses an insertion device according to the preamble of claim 1 and a method of manufacturing a studded tire according to the preamble of claim 7. The insertion device inserts stud pins in stud pin insertion holes provided in a tread portion of a tire. The stud pins are inserted by a gun. The insertion device further comprises a camera. When the tire is rotating, the surface of the tire is sensed or read by the camera which detects the stud pin receiving holes. The coordinates of these holes are processed in an image processing device, for example a computer or a microprocessor. These coordinates are used to guide and insert the stud pins into the tire.

Other insertion devices are known from JP S61 110606 A and JP S57 95203 A.

In light of this, the present invention has an object of providing a stud pin insertion device and a method of manufacturing a studded tire capable of performing stud pin insertion without the need for teaching.

### Solution to Problem

A first aspect of the present invention is an insertion device for inserting stud pins in stud pin insertion holes provided in a tread portion of a tire, the insertion device comprising a profile measuring unit comprising a first profile measuring device that measures a profile of the tread portion of the tire; a hole position identification unit that identifies positions in a tire circumferential direction and positions in a tire lateral direction of the stud pin insertion holes on the basis of the measured profile; and an insertion unit that inserts the stud pins into the stud pin insertion holes, the positions of which are identified.

According to the aspect described above, on the basis of the profile of the tread portion of the tire measured by the profile measuring unit, the positions in the tire circumferential direction and the positions in the tire lateral direction of the stud pin insertion holes are identified by the hole position identification unit, and stud pins are inserted into the stud pin insertion holes, the positions of which are identified, by the insertion unit. In this manner, insertion operation of stud pins can be performed without the need for teaching.

The insertion unit comprises a rotation mechanism that rotates the tread portion in the tire circumferential direction; and
the first profile measuring device measures an entire profile of the tread portion by measuring the profile of the tread portion in the tire lateral direction while the tread portion is in rotation.

The hole position identification unit preferably identifies the positions in the tire circumferential direction and the positions in the tire lateral direction of the stud pin insertion holes in a region of the tread portion where the profile is measured while the tread portion is in rotation.

The rotation mechanism preferably rotates the tread portion in the tire circumferential direction for at least two full rotations;
the first profile measuring device preferably measures the entire profile of the tread portion twice by measuring the profile of the tread portion in the tire lateral direction while the tread portion is in rotation;
the insertion unit preferably inserts stud pins into the stud pin insertion holes after the first measurement of the entire profile of the tread portion and before the second measurement; and
the hole position identification unit preferably determines whether or not stud pins have been inserted into the stud pin insertion holes by comparing the entire profile of the tread portion of the first measurement and the entire profile of the tread portion of the second measurement.

According to the embodiments described above, stud pins are inserted into the stud pin insertion holes after the first measurement of the entire profile of the tread portion and before the second measurement, and whether or not stud pins have been inserted into the stud pin insertion holes is determined by comparing the entire profile of the tread portion of the first measurement and the entire profile of the tread portion of the second measurement. Thus, after inserting the stud pins, a check of whether or not the stud pins have been appropriately inserted into the tire can be immediately performed.

The measuring unit comprises a second profile measuring device that measures the profile of the tread portion in the tire lateral direction; an insertion position where stud pins are inserted by the insertion unit is set to between a first measuring position where the first profile measuring device measures the tread portion and a second measuring position where the second profile measuring device measures the tread portion; the rotation mechanism rotates the tread portion in a direction from the first measuring position toward the insertion position; the insertion unit inserts stud pins into the stud pin insertion holes after the first profile measuring device measures the profile of the tread portion and before the second profile measuring device measures the profile of the tread portion; and the hole position identification unit determines whether or not stud pins have been inserted into the stud pin insertion holes by comparing the entire profile of the tread portion measured by the first profile measuring device and the entire profile of the tread portion measured by the second profile measuring device.

According to the embodiment described above, stud pins are inserted into the stud pin insertion holes after the first profile measuring device measures the entire profile of the tread portion and before the second profile measuring device measures the entire profile of the tread portion, and whether or not stud pins have been inserted into the stud pin insertion holes is determined by comparing the entire profile of the tread portion measured by the first profile measuring device and the entire profile of the tread portion measured by the second profile measuring device. Thus, after inserting the stud pins, a check of whether or not the stud pins have been appropriately inserted into the tire can be immediately performed.

Information on a shape of the stud pin insertion holes is preferably stored in the hole position identification unit; and the hole position identification unit preferably identifies the positions in the tire circumferential direction and positions in the tire lateral direction of the stud pin insertion holes by performing pattern matching on information on the profile of the tread portion of the tire measured by the profile measuring unit and information on the shape of the stud pin insertion holes.

The insertion unit preferably comprises a rotation mechanism that rotates the tread portion in the tire circumferential direction, an insertion head that inserts stud pins into the stud pin insertion holes, a lateral driving mechanism that adjusts a position of the insertion head relative to the tread portion in the tire lateral direction, and a radial driving mechanism that adjusts a distance of the insertion head from the tread portion in a tire radial direction.

The rotation mechanism preferably rotates the tread portion so that the positions in the tire circumferential direction of the stud pin insertion holes identified by the hole position identification unit correspond to the position of the insertion head; and the lateral driving mechanism preferably moves the insertion head to the positions in the tire lateral direction of the stud pin insertion holes identified by the hole position identification unit.

A second aspect of the present invention is a method of manufacturing a studded tire by inserting stud pins into stud pin insertion holes provided in a tread portion of a tire, the method comprising the steps of: measuring a profile of the tread portion of the tire; identifying positions in a tire circumferential direction and positions in a tire lateral direction of the stud pin insertion holes on the basis of the measured profile; and inserting stud pins into the stud pin insertion holes, the positions of which are identified.

According to the aspect described above, on the basis of the measured profile of the tread portion of the tire, the positions in the tire circumferential direction and the positions in the tire lateral direction of the stud pin insertion holes are identified, and stud pins are inserted into the stud pin insertion holes, the positions of which are identified. In this manner, insertion operation of stud pins can be performed without the need for teaching.

The second aspect comprises the step of rotating the tread portion in the tire circumferential direction; and in the profile measuring step, an entire profile of the tread portion is measured by measuring the profile of the tread portion in the tire lateral direction while the tread portion is in rotation.

In the hole position identifying step, the positions in the tire circumferential direction and the positions in the tire lateral direction of the stud pin insertion holes in a region of the tread portion where the profile is measured are preferably identified while the tread portion is in rotation.

In the profile measuring step, the entire profile of the tread portion is measured twice by measuring the profile of the tread portion in the tire lateral direction while the tread portion is in rotation; the inserting step is performed after the first measurement of the entire profile of the tread portion and before the second measurement; and the second aspect further comprises the step of determining whether or not stud pins have been inserted into the stud pin insertion holes by comparing the entire profile of the tread portion of the first measurement and the entire profile of the tread portion of the second measurement.

According to the embodiments described above, stud pins are inserted into the stud pin insertion holes after the first measurement of the entire profile of the tread portion and before the second measurement, and whether or not stud pins have been inserted into the stud pin insertion holes is determined by comparing the entire profile of the tread portion of the first measurement and the entire profile of the tread portion of the second measurement. Thus, after inserting the stud pins, a check of whether or not the stud pins have been appropriately inserted into the tire can be immediately performed.

In the rotating step, the tread portion is preferably rotated in the tire circumferential direction for at least two full rotations; and in the profile measuring step, the first measurement is preferably for the first full rotation of the tread portion and the second measurement is preferably for the second full rotation of the tread portion.

According to the embodiments described above, stud pins are inserted into the stud pin insertion holes after the first full rotation of the entire profile of the tread portion and before the second full rotation, and whether or not stud pins have been inserted into the stud pin insertion holes is determined by comparing the entire profile of the tread portion of the first full rotation and the entire profile of the tread portion of the second full rotation. Thus, after inserting the stud pins, a check of whether or not the stud pins have been appropriately inserted into the tire can be immediately performed.

In the profile measuring step, the first measurement is performed upstream in a tire rotation direction of an insertion position of the stud pins and the second measurement is performed downstream in the tire rotation direction of the insertion position of the stud pins.

According to the embodiments described above, stud pins are inserted into the stud pin insertion holes after the profile of the tread portion is measured at a position upstream in the tire rotation direction of the insertion position of the stud pins and before the profile of the tread portion is measured at a position downstream in the tire rotation direction of the insertion position of the stud pins, and whether or not stud pins have been inserted into the stud pin insertion holes is determined by comparing the entire profile of the tread portion measured upstream and the entire profile of the tread portion measured downstream. Thus, after inserting the stud pins, a check of whether or not the stud pins have been appropriately inserted into the tire can be immediately performed.

In the hole position identifying step, the positions in the tire circumferential direction and positions in the tire lateral direction of the stud pin insertion holes are preferably identified by performing pattern matching on information on the profile of the tread portion of the tire measured in the profile measuring step and information on a shape of the stud pin insertion holes stored in a computer.

### Advantageous Effects of Invention

According to the aspects described above, stud pins can be inserted without the need for teaching.

### Brief Description of Drawings

- FIG. 1: is an elevation view illustrating an insertion device 1 of a first embodiment of the present invention.
- FIG. 2: is a schematic view of the insertion device 1 as viewed in the direction of the arrow II of FIG. 1.
- FIG. 3: is a block diagram illustrating a configuration of a control system of the insertion device 1.
- FIG. 4: is a developed view of a tread portion for illustrating the positional relationship between the tread portion of a tire and the insertion device 1.
- FIG. 5: is a developed view of the tread portion for illustrating the positional relationship between the tread portion of the tire and the insertion device 1.
- FIG. 6: is a developed view of the tread portion for illustrating the positional relationship between the tread portion of the tire and the insertion device 1.
- FIG. 7: is a developed view of the tread portion for illustrating the positional relationship between the tread portion of the tire and the insertion device 1.

### Description of Embodiments

A stud pin insertion device and a method of manufacturing a studded tire according to embodiments of the present invention are described below with reference to the drawings.

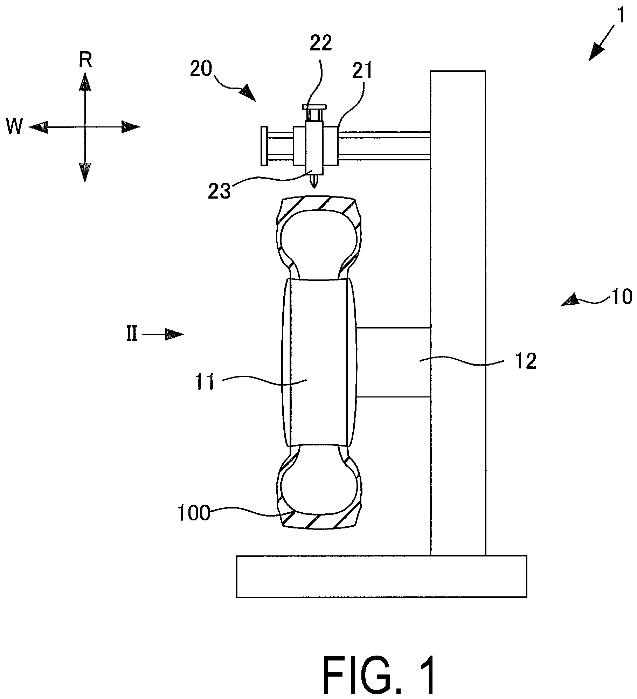

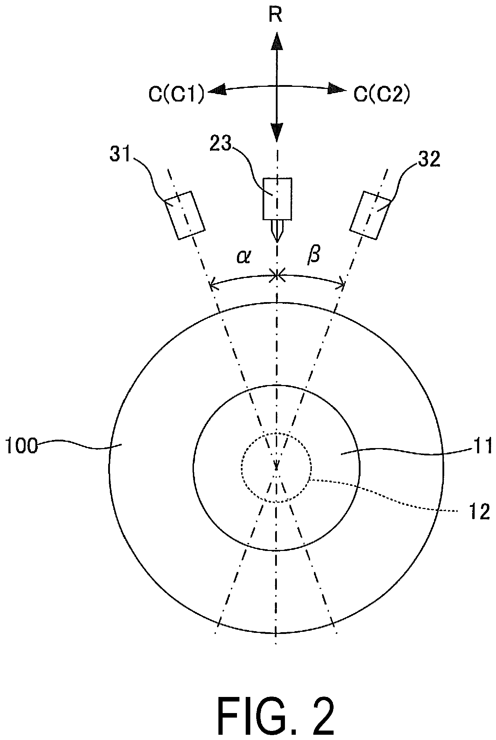

FIG. 1 is an elevation view illustrating a stud pin insertion device 1 according to a first embodiment of the present invention. FIG. 2 is a schematic view of the stud pin insertion device 1 as viewed in the direction of the arrow II of FIG. 1.
As illustrated in FIG. 1, the insertion device 1 includes a tire support portion 10 and an insertion unit 20. The tire support portion 10 includes a rim 11. A tire 100 that is the target for insertion of the stud pins is mounted on the rim 11. A rotation mechanism 12 is provided on the tire support portion 10. The rotation mechanism 12 rotates the rim 11 in the tire circumferential direction C (C1 or C2) (see FIG. 2). Note that the rim 11 is preferably rotated when the tire 100 is mounted on the rim 11 and the tire cavity region between the tire 100 and the rim 11 is inflated with air.

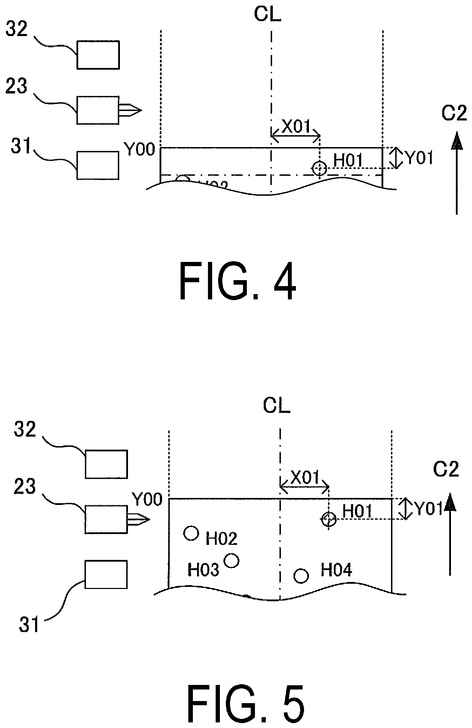

The insertion unit 20 includes a lateral driving mechanism 21, a radial driving mechanism 22, and an insertion head 23 (stud gun).
The lateral driving mechanism 21 adjusts the position of the insertion head 23 and the tread portion relative to one another with respect to the lateral direction W of the tire 100 (see FIG. 1).
The radial driving mechanism 22 adjusts the distance between the insertion head 23 and the tread portion in the radial direction R of the tire 100 (see FIGS. 1 and 2). In an embodiment in which the insertion head 23 is disposed above the rim 11, a lifting mechanism for the insertion head 23 may also be employed as the radial driving mechanism 22.
The insertion head 23 inserts stud pins into stud pin insertion holes (see FIGS. 4 to 7) provided in the tread portion of the tire 100.

As illustrated in FIG. 2, the insertion device 1 further includes a first imaging element 31 and a second imaging element 32. The first imaging element 31 and the second imaging element 32 are profile measuring devices that measure the entire profile of the tread portion of the tire. The first imaging element 31 and the second imaging element 32 are a camera and a two-dimensional laser displacement meter, for example. Using the first imaging element 31 and the second imaging element 32, for example, the entire profile of the tread portion can be measured by rotating the tire 100 while measuring the profile of the tread portion in the tire lateral direction.

As illustrated in FIG. 2, the first imaging element 31 and the second imaging element 32 are disposed at positions separated in the tire rotation direction, and the insertion head 23 is disposed between the first imaging element 31 and the second imaging element 32. In FIG. 2, the first imaging element 31 is disposed at a position separated from the insertion head 23 in a C1 direction (upstream), and the second imaging element 32 is disposed at a position separated from the insertion head 23 in a C2 direction (downstream).

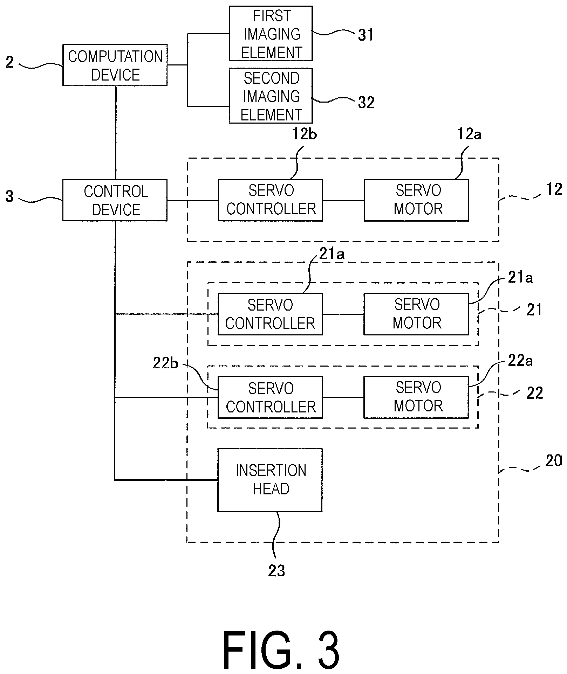

FIG. 3 is a block diagram illustrating a configuration of a control system of the insertion device 1. As illustrated in FIG. 3, the control system of the insertion device 1 includes a computation device 2 and a control device 3.
The computation device 2 controls the first imaging element 31 and the second imaging element 32 and measures the profile of the tread portion on the basis of image signals received from the first imaging element 31 and the second imaging element 32. The computation device 2 may be a personal computer (PC), for example.

The computation device 2 composes a profile measuring unit that includes the profile measuring devices, the first imaging element 31 and the second imaging element 32, that measure the profile of the tread portion of the tire.
As described below, the computation device 2 receives information on the rotational angle of the tire 100 from the control device 3. The computation device 2 generates information on the profile of the tread portion of the tire on the basis of the rotational angle information and signals received from the first imaging element 31 and the second imaging element 32.

Additionally, the computation device 2 composes a hole position identification unit that identifies coordinates of the stud pin insertion holes (positions in the tire circumferential direction and positions in the tire lateral direction). Specifically, the computation device 2 references the information on the profile of the tread portion of the manufactured tire and performs pattern matching with the information on the shape of the stud pin insertion holes stored therein (image information of holes 5 mm in diameter, for example) to identify the coordinates of the stud pin insertion holes in the tread portion. By performing pattern matching, the stud pin insertion holes can be distinguished from other components on the tread portion (such as grooves and sipes).
The computation device 2 sends the coordinate information of the identified stud pin insertion holes to the control device 3.

The computation device 2 may further include a function of determining whether or not a stud pin is inserted into a stud pin insertion hole. For example, the computation device 2 can determine whether or not a stud pin is inserted into a stud pin insertion hole by, in advance, storing in the computation device 2 information on the shape of a stud pin insertion hole with a stud pin inserted therein, and performing pattern matching with the information on the profile of the tread portion in reference to the coordinates of the stud pin insertion holes identified as described above. Alternatively, the computation device 2 may determine whether or not a stud pin is inserted into a stud pin insertion hole by acquiring information on the difference between information on the shape of the stud pin insertion hole prior to a stud pin being inserted therein and information on the shape of the stud pin insertion hole after a stud pin is inserted therein, and using this difference information. For example, by, in advance, storing in the computation device 2 information on the differences between information on the shape of a stud pin insertion hole with a stud pin inserted therein and the information on the shape of a stud pin insertion hole without a stud pin inserted therein, and comparing the obtained difference information with the stored difference information, the computation device 2 can determine whether or not a stud pin is inserted into a stud pin insertion hole.

The control device 3 controls the rotation mechanism 12 and the insertion unit 20 (the lateral driving mechanism 21, the radial driving mechanism 22, and the insertion head 23) on the basis of the computation result of the computation device 2. Additionally, the control device 3 sends information on the rotational angle of the rotation mechanism 12 (information on the position in the tire circumferential direction C of the insertion head 23 relative to the tread portion), information on the position in the tire lateral direction W of the insertion head 23 relative to the tread portion, information on the position in the tire radial direction R of the insertion head 23 relative to the tread portion, and information on whether or not the insertion head 23 has performed insertion (described below) to the computation device 2. The control device 3 may be a programmable logic controller (PLC), for example.
The rotation mechanism 12 includes a servo motor 12a and a servo controller 12b. The servo controller 12b rotates the servo motor 12a on the basis of a control signal received from the control device 3. Then, the rotational angle of the rim 11 is adjusted, and the position in the tire circumferential direction C of the tread portion of the tire 100 mounted on the rim 11 relative to the insertion head 23 is adjusted.

The lateral driving mechanism 21 includes a servo motor 21a and a servo controller 21b. The servo controller 21b rotates the servo motor 21a on the basis of a control signal received from the control device 3. Then, the position in the tire lateral direction W of the insertion head 23 relative to the tread portion is adjusted.

The radial driving mechanism 22 includes a servo motor 22a and a servo controller 22b. The servo controller 22b rotates the servo motor 22a on the basis of a control signal received from the control device 3. Then, the position in the tire radial direction R of the insertion head 23 is adjusted.

The insertion head 23 inserts stud pins into stud pin insertion holes in cooperation with the radial driving mechanism 22 on the basis of a control signal received from the control device 3. The insertion operation is described in detail below.

### Insertion Operation

First, once position of the insertion head 23 in the tire circumferential direction C and tire lateral direction W relative to the tread portion is set to the stud pin insertion hole position, the radial driving mechanism 22 moves the insertion head 23 inward in the tire radial direction. At this time, a plurality of claws provided on the tip of the insertion head 23 are inserted into a stud pin insertion hole in a closed state. Next, on the basis of a control signal received from the control device 3, the insertion head 23 expands the stud pin insertion hole by opening out the plurality of claws that were inserted into the stud pin insertion hole in a closed state. Then, a stud pin is supplied into the expanded stud pin insertion hole from the middle of the opened claws. Thereafter, with the stud pin still in the stud pin insertion hole, the radial driving mechanism 22 moves the insertion head 23 in the tire radial direction to remove the plurality of claws from the stud pin insertion hole. This allows the stud pin insertion hole that was expanded by the claws to return to its original state, thus fixing the stud pin therein via the elastic force of the rubber of the tread portion.
The insertion operation by the insertion head 23 then terminates.

Next, a method of manufacturing a studded tire by using the insertion device 1 to insert stud pins into the tire 100 will be described with reference to FIGS. 4 to 7.
Identification of Coordinates of Stud Pin Insertion Holes
First, the rotation mechanism 12 is driven, and rotation of the tire 100 mounted on the rim 11 is begun in the C2 direction of FIG. 2. At the same time, the first imaging element 31 begins measurement of the profile of the tread portion in the tire lateral direction. When the rotation of the tire 100 is begun, the position in the tire circumferential direction of the tread portion corresponds to the position of the first imaging element 31 and is defined as a reference position Y00.

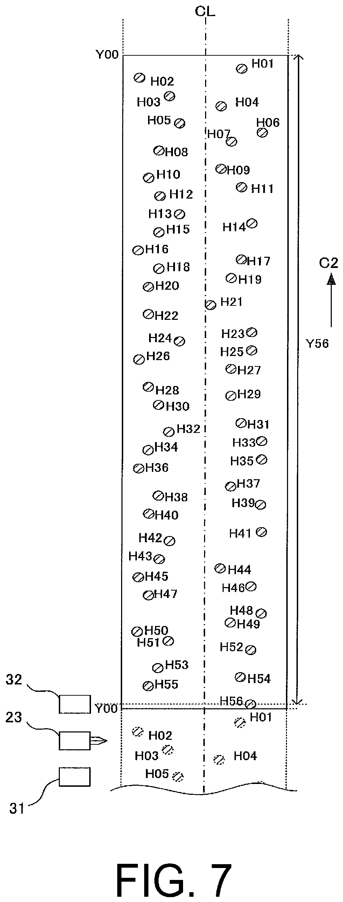

As the tire 100 is rotated, the stud pin insertion holes pass through an imaging region of the first imaging element 31 in succession. On the basis of the information on the profile of the tread portion acquired by the first imaging element 31, the coordinates (position in the tire lateral direction, position in the tire circumferential direction) of the stud pin insertion holes are successively identified by the computation device 2. As illustrated in FIG. 4 for example, the position of the stud pin insertion hole H01 in the tire lateral direction is identified as X01 and the position in the tire circumferential direction is identified as Y01. Here, X01 is the distance from a tire equator line CL to the center of the stud pin insertion hole H01. Y01 is the distance from the reference position Y00 to the center of the stud pin insertion hole H01 following the tire outer circumferential surface. Next, following the tire outer circumferential surface from the reference position Y00, the coordinates of stud pin insertion holes H02, H03, H04,..., H56 are identified in a similar manner.
When the tire 100 rotates 360°, the first imaging element 31 stops imaging. At this point, the coordinates of all the stud pin insertion holes H01 to H056 (see FIG. 7) provided on the tire 100 have been identified.

### Insertion of Stud Pins

As illustrated in FIG. 2, in a plane orthogonal to the rotation axis of the tire 100, a straight line connecting the insertion head 23 and the center of rotation of the tire and a straight line connecting the first imaging element 31 and the center of rotation of the tire 100 form an angle a, and a straight line connecting the insertion head 23 and the center of rotation of the tire and a straight line connecting the second imaging element 32 and the center of rotation of the tire 100 form an angle β. Additionally, a straight line connecting the reference position Y00 and the center of rotation of the tire and a straight line connecting the stud pin insertion hole Hn (n = 01, 02, 03,..., 56) and the center of rotation of the tire 100 form an angle θₙ (0° < θₙ < 360°). Note that in the example illustrated in FIGS. 4 to 7, 56 stud pin insertion holes from H01 to H56 are formed in the tread portion of the tire 100.

As illustrated in FIG. 5, when the tire 100 is rotated the angle α + θ1 from the starting point, the insertion head 23 reaches position Y01 in the tire circumferential direction of the stud pin insertion hole H01. Here, the lateral driving mechanism 21 is driven to move the insertion head 23 to the position X01 in the tire lateral direction of the stud pin insertion hole H01. Thereafter, the insertion operation described above is performed and the stud pin is fixed inside the stud pin insertion hole H01.

Next, in a similar manner, the tire is rotated the angle α + θₙ from the starting point, the insertion head 23 is moved to position Xn in the tire lateral direction, and insertion is performed, this process continuing until the last stud pin insertion hole (H56 in FIG. 7). When insertion operation has finished for the last stud pin insertion hole H56, the tire 100 has been rotated the angle α + θ₅₆ from the starting point.

Note that the second imaging element 32 may be used for verification (described below) after insertion of the stud pins.

### Verification after Insertion of Stud Pins

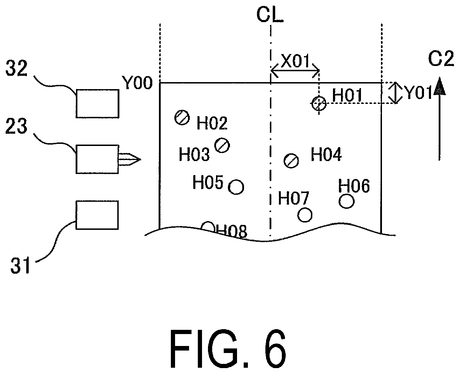

When the tire 100 is rotated the angle α + β from the starting point, the second imaging element 32 reaches the reference position Y00. Then, the second imaging element 32 begins measurement of the profile of the tread portion in the tire lateral direction.
As illustrated in FIG. 6, when the tire 100 is rotated the angle α + β + θ₁ from the starting point, the second imaging element 32 reaches position Y01 in the tire circumferential direction of the stud pin insertion hole H01. Then, on the basis of information on the profile of the tread portion acquired by the second imaging element 32, the computation device 2 determines whether or not a stud pin has been inserted into the stud pin insertion hole H01. The computation device 2 may also determines whether or not a stud pin has been inserted via pattern matching using information on the shape of the stud pin insertion hole with a stud pin inserted therein. Additionally, the computation device 2 may also determine whether or not a stud pin has been inserted on the basis of information on the difference between information on the profile of the tread portion acquired by the second imaging element 32 and information on the profile of the tread portion acquired by the first imaging element 31.
Thereafter, determination of whether or not a stud pin has been inserted can be performed from the stud pin insertion holes H02, H03, H04,..., H56 in a similar manner.

Once determination has completed of whether or not a stud pin has been inserted into the last stud pin insertion hole H56, verification of whether or not stud pins have been inserted into all of the stud pin insertion holes H01 to H056 terminates. As illustrated in FIG. 7, at this point, the tire 100 has been rotated the angle α + β + θ₅₆ from the starting point.
When the tire 100 rotates α + β + 360° from the starting point, the second imaging element 32 stops imaging. Then, verification of whether or not stud pins have been inserted into all of the stud pin insertion holes H01 to H056 provided in the tire 100 can be performed. If stud pins have been inserted into all of the stud pin insertion holes H01 to H056, the insertion of stud pins into the tire 100 terminates.

If it is determined that a stud pin has not been inserted into one of the stud pin insertion holes H01 to H056, the tire 100 is rotated and the position of the insertion head 23 is moved so that the insertion head 23 comes into correspondence with the target stud pin insertion hole, and insertion is again performed. In this manner, stud pins can be fitted into all of the stud pin insertion holes H01 to H056. Additionally, a hand-held stud gun may be used to insert stud pins into stud pin insertion holes that are determined to not have stud pins inserted therein. Then, insertion of stud pins into the tire 100 is terminated, and the studded tire is completed.

According to the method of manufacturing a studded tire described above, on the basis of the profile of the tread portion of the tire measured by the first imaging element 31, the positions in the tire circumferential direction and the positions in the tire lateral direction of the stud pin insertion holes are identified, and stud pins are inserted into the stud pin insertion holes, the positions of which are identified, by the insertion unit 23. In this manner, insertion operation of stud pins can be performed without the need for teaching.

By measuring the profile of the tread portion in the tire lateral direction while rotating the tire, stud pins can be successively inserted into the stud pin insertion holes, the positions of which are identified. Thus, stud pins can be fixed into all of the stud pin insertion holes H01 to H056 while the tire 100 is rotated the angle α + 360° from the starting point.

Additionally, by determining whether or not stud pins have been inserted into the stud pin insertion holes on the basis of the profile of the tread portion of the tire measured by the second imaging element 32, it can be verified whether or not stud pins have been inserted into all of the stud pin insertion holes H01 to H056 while rotating the tire 100 the angle α + β + 360° from the starting point.

### Modified Example

In the embodiment described above, the first imaging element 31 and the second imaging element 32 are provided separately. However, the present invention is not limited to such a configuration.
For example, the first imaging element 31 may perform all of acquiring information on the profile of the tread portion prior to stud pins being inserted into the stud pin insertion holes and information on the profile of the tread portion after stud pins have been inserted into the stud pin insertion holes, and determining whether or not stud pins have been inserted into all of the stud pin insertion holes H01 to H056 by comparing the information. In such an embodiment, the first imaging element 31 may acquire information on the profile of the tread portion prior to stud pins being inserted into the stud pin insertion holes while the tire 100 is rotated 360° from the starting point, and thereafter acquire information on the profile of the tread portion after stud pins have been inserted into the stud pin insertion holes while the tire 100 is rotated 360° again. With this configuration, it can be determined whether or not stud pins have been inserted into all of the stud pin insertion holes H01 to H056 by rotating the tire 100 720° from the starting point (two full rotations).

Stud pin insertion devices and methods of manufacturing a studded tire of embodiments of the present invention have been described in detail above. However, the present invention is not limited to the embodiments described above, but may be improved or modified in various ways within the scope of the present invention. For example, in an embodiment described above, the profile of the tread portion was measured by an imaging element. However, the present invention is not limited to this configuration, and a light section method may be used to measure the profile of the tread portion to identify the position of the stud pin insertion holes and verify whether or not stud pins have been inserted therein.

### Reference Signs List

- 1: Insertion device
- 2: Computation device
- 3: Control device
- 10: Tire support portion
- 11: Rim
- 12: Rotation mechanism
- 12a, 21a, 22a: Servo motor
- 12b, 21b, 22b: Servo controller
- 20: Insertion unit
- 21: Lateral driving mechanism
- 22: Radial driving mechanism
- 23: Insertion head
- 31: First imaging element
- 32: Second imaging element
- 100: Tire
- H01: to H056 Stud pin insertion hole

## Claims

1. An insertion device (1) for inserting stud pins in stud pin insertion holes (H01 - H056) provided in a tread portion of a tire (100), the insertion device (1) comprising:
a profile measuring unit (2) comprising a first profile measuring device that measures a profile of the tread portion of the tire (100);
a hole position identification unit (2) that identifies positions in a tire circumferential direction and positions in a tire lateral direction of the stud pin insertion holes (H01 - H056) on the basis of the measured profile; and
an insertion unit (20) that inserts the stud pins into the stud pin insertion holes (H01 - H056), the positions of which are identified; wherein
the insertion unit (20) comprises a rotation mechanism (12) that rotates the tread portion in the tire circumferential direction; and
the first profile measuring device measures an entire profile of the tread portion by measuring the profile of the tread portion in the tire lateral direction while the tread portion is in rotation,
**characterized in that**
the measuring unit (2) comprises a second profile measuring device that measures the profile of the tread portion in the tire lateral direction;
an insertion position where stud pins are inserted by the insertion unit (20) is set to between a first measuring position where the first profile measuring device measures the tread portion and a second measuring position where the second profile measuring device measures the tread portion;
the rotation mechanism (12) rotates the tread portion in a direction from the first measuring position toward the insertion position;
the insertion unit (20) inserts stud pins into the stud pin insertion holes (H01 - H056) after the first profile measuring device measures the profile of the tread portion and before the second profile measuring device measures the profile of the tread portion; and
the hole position identification unit (2) determines whether or not stud pins have been inserted into the stud pin insertion holes (H01 - H056) by comparing the entire profile of the tread portion measured by the first profile measuring device and the entire profile of the tread portion measured by the second profile measuring device.

2. The insertion device (1) according to claim 1, wherein
the hole position identification unit (2) identifies the positions in the tire circumferential direction and the positions in the tire lateral direction of the stud pin insertion holes (H01 - H056) in a region of the tread portion where the profile is measured while the tread portion is in rotation.

3. The insertion device (1) according to claim 1 or 2, wherein
the rotation mechanism (12) rotates the tread portion in the tire circumferential direction for at least two full rotations;
the first profile measuring device measures the entire profile of the tread portion twice by measuring the profile of the tread portion in the tire lateral direction while the tread portion is in rotation;
the insertion unit (20) inserts stud pins into the stud pin insertion holes (H01 - H056) after the first measurement of the entire profile of the tread portion and before the second measurement; and
the hole position identification unit (2) determines whether or not stud pins have been inserted into the stud pin insertion holes (H01 - H056) by comparing the entire profile of the tread portion of the first measurement and the entire profile of the tread portion of the second measurement.

4. The insertion device (1) according to any one of claims 1 to 3, wherein
information on a shape of the stud pin insertion holes (H01 - H056) is stored in the hole position identification unit (2); and
the hole position identification unit (2) identifies the positions in the tire circumferential direction and positions in the tire lateral direction of the stud pin insertion holes (H01 - H056) by performing pattern matching on information on the profile of the tread portion of the tire (100) measured by the profile measuring unit (2) and information on the shape of the stud pin insertion holes (H01 - H056).

5. The insertion device (1) according to any one of claims 1 to 4, wherein
the insertion unit (20) comprises a rotation mechanism (12) that rotates the tread portion in the tire circumferential direction, an insertion head (23) that inserts stud pins into the stud pin insertion holes (H01 - H056), a lateral driving mechanism (21) that adjusts a position of the insertion head (23) relative to the tread portion in the tire lateral direction, and a radial driving mechanism (22) that adjusts a distance of the insertion head (23) from the tread portion in a tire radial direction.

6. The insertion device (1) according to claim 5, wherein
the rotation mechanism (12) rotates the tread portion so that the positions in the tire circumferential direction of the stud pin insertion holes (H01 - H056) identified by the hole position identification unit (2) correspond to the position of the insertion head (23); and
the lateral driving mechanism (21) moves the insertion head (23) to the positions in the tire lateral direction of the stud pin insertion holes (H01 - H056) identified by the hole position identification unit (2).

7. A method of manufacturing a studded tire (100) by inserting stud pins into stud pin insertion holes (H01 - H056) provided in a tread portion of a tire (100), the method comprising the steps of:
measuring a profile of the tread portion of the tire (100);
identifying positions in a tire circumferential direction and positions in a tire lateral direction of the stud pin insertion holes (H01 - H056) on the basis of the measured profile;
inserting stud pins into the stud pin insertion holes (H01 - H056), the positions of which are identified;
rotating the tread portion in the tire circumferential direction; wherein
in the profile measuring step, an entire profile of the tread portion is measured by measuring the profile of the tread portion in the tire lateral direction while the tread portion is in rotation,
**characterized in that**
in the profile measuring step, the entire profile of the tread portion is measured twice by measuring the profile of the tread portion in the tire lateral direction while the tread portion is in rotation;
the inserting step is performed after the first measurement of the entire profile of the tread portion by the measuring unit and before the second measurement; and the method further comprises the step of
determining whether or not stud pins have been inserted into the stud pin insertion holes (H01 - H056) by comparing the entire profile of the tread portion of the first measurement and the entire profile of the tread portion of the second measurement; wherein
in the profile measuring step, the first measurement is performed upstream in a tire rotation direction of an insertion position of the stud pins and the second measurement is performed downstream in the tire (100) rotation direction of the insertion position of the stud pins.

8. The method of manufacturing a studded tire (100) according to claim 7, wherein
in the hole position identifying step, the positions in the tire circumferential direction and the positions in the tire lateral direction of the stud pin insertion holes (H01 - H056) in a region of the tread portion where the profile is measured are identified while the tread portion is in rotation.

9. The method of manufacturing a studded tire (100) according to claim 7 or 8, wherein
in the rotating step, the tread portion is rotated in the tire circumferential direction for at least two full rotations; and
in the profile measuring step, the first measurement is for the first full rotation of the tread portion and the second measurement is for the second full rotation of the tread portion.

10. The method of manufacturing a studded tire (100) according to any one of claims 7 to 9, wherein
in the hole position identifying step, the positions in the tire circumferential direction and positions in the tire lateral direction of the stud pin insertion holes (H01 - H056) are identified by performing pattern matching on information on the profile of the tread portion of the tire (100) measured in the profile measuring step and information on a shape of the stud pin insertion holes (H01 - H056) stored in a computer.

## Patentansprüche

1. Einsetzvorrichtung (1) zum Einsetzen von Spikestiften in Spikestifteinsetzlöcher (H01 - H056), die in einem Laufflächenabschnitt eines Reifens (100) bereitgestellt sind, wobei die Einsetzvorrichtung (1) Folgendes umfasst:
eine Profilmesseinheit (2) mit einer ersten Profilmessvorrichtung, die ein Profil des Laufflächenabschnitts des Reifens (100) misst;
eine Lochpositionsidentifikationseinheit (2), die Positionen in einer Reifenumfangsrichtung und Positionen in einer Reifenquerrichtung der Spikestifteinsetzlöcher (H01 - H056) auf Basis des gemessenen Profils identifiziert; und eine Einsetzeinheit (20), welche die Spikestifte in die Spikestifteinsetzlöcher (H01 - H056) einsetzt, deren Positionen identifiziert sind; wobei
die Einsetzeinheit (20) einen Drehmechanismus (12) umfasst, der den Laufflächenabschnitt in Reifenumfangsrichtung dreht; und
die erste Profilmessvorrichtung ein gesamtes Profil des Laufflächenabschnitts misst, indem sie das Profil des Laufflächenabschnitts in Reifenquerrichtung misst, während sich der Laufflächenabschnitt in Drehung befindet, **dadurch gekennzeichnet, dass**
die Messeinheit (2) eine zweite Profilmessvorrichtung umfasst, die das Profil des Laufflächenabschnitts in Reifenquerrichtung misst;
eine Einsetzposition, in der Spikestifte von der Einsetzeinheit (20) eingesetzt werden, zwischen einer ersten Messposition, in der die erste Profilmessvorrichtung den Profilabschnitt misst, und einer zweiten Messposition, in der die zweite Profilmessvorrichtung den Laufflächenabschnitt misst, eingestellt ist;
der Drehmechanismus(12) den Laufflächenabschnitt in einer Richtung von der ersten Messposition zu der Einsetzposition hin dreht;
die Einsetzeinheit (20) Spikestifte in die Spikestifteinsetzlöcher (H01 - H056) einsetzt, nachdem die erste Profilmessvorrichtung das Profil des Laufflächenabschnitts gemessen hat und bevor die zweite Profilmessvorrichtung das Profil des Laufflächenabschnitts misst; und
die Lochpositionsidentifikationseinheit (2) bestimmt, ob Spikestifte in die Spikestifteinsetzlöcher (H01 - H056) eingesetzt wurden oder nicht, indem sie das gesamte Profil des von der ersten Profilmessvorrichtung gemessenen Laufflächenabschnitts mit dem gesamten Profil des von der zweiten Profilmessvorrichtung gemessenen Laufflächenabschnitts vergleicht.

2. Einsetzvorrichtung (1) nach Anspruch 1, wobei
die Lochpositionsidentifikationseinheit (2) die Positionen in Reifenumfangsrichtung und die Positionen in Reifenquerrichtung der Spikestifteinsetzlöcher (H01 - H056) in einem Bereich des Laufflächenabschnitts identifiziert, in dem das Profil gemessen wird, während der Laufflächenabschnitt in Drehung ist.

3. Einsetzvorrichtung (1) nach Anspruch 1 oder 2, wobei
der Drehmechanismus(12) den Laufflächenabschnitt in Reifenumfangsrichtung für mindestens zwei volle Umdrehungen dreht;
die erste Profilmessvorrichtung das gesamte Profil des Laufflächenabschnitts zweimal misst, indem sie das Profil des Laufflächenabschnitts in Reifenquerrichtung misst, während sich der Laufflächenabschnitt in Drehung befindet;
die Einsetzeinheit (20) Spikestifte in die Spikestifteinsetzlöcher (H01 - H056) nach der ersten Messung des gesamten Profils des Laufflächenabschnitts und vor der zweiten Messung einsetzt; und
die Lochpositionsidentifikationseinheit (2) bestimmt, ob Spikestifte in die Spikestifteinsetzlöcher (H01 - H056) eingesetzt wurden oder nicht, indem sie das gesamte Profil des Laufflächenabschnitts aus der ersten Messung mit dem gesamten Profil des Laufflächenabschnitts aus der zweiten Messung vergleicht.

4. Einsetzvorrichtung (1) nach einem der Ansprüche 1 bis 3, wobei
Informationen über eine Form der Spikestifteinsetzlöcher (H01 - H056) in der Lochpositionsidentifikationseinheit (2) gespeichert sind; und
die Lochpositionsidentifikationseinheit (2) die Positionen in Reifenumfangsrichtung und Positionen in Reifenquerrichtung der Spikestifteinsetzlöcher (H01 - H056) identifiziert, indem sie einen Musterabgleich in Bezug auf Informationen über das von der Profilmesseinheit (2) gemessene Profil des Laufflächenabschnitts des Reifens (100) und Informationen über die Form der Spikestifteinsetzlöcher (H01 - H056) durchführt.

5. Einsetzvorrichtung (1) nach einem der Ansprüche 1 bis 4, wobei
die Einsetzeinheit (20) einen Drehmechanismus (12), der den Laufflächenabschnitt in Reifenumfangsrichtung dreht, einen Einsetzkopf (23), der Spikestifte in die Spikestifteinsetzlöcher (H01 - H056) einsetzt, einen seitlichen Antriebsmechanismus (21), der eine Position des Einsetzkopfes (23) relativ zu dem Laufflächenabschnitt in Reifenquerrichtung einstellt, und einen radialen Antriebsmechanismus (22) umfasst, der einen Abstand des Einsetzkopfes (23) von dem Laufflächenabschnitt in einer Reifenradialrichtung einstellt.

6. Einsetzvorrichtung (1) nach Anspruch 5, wobei
der Drehmechanismus (12) den Laufflächenabschnitt so dreht, dass die Positionen der Spikestifteinsetzlöcher (H01 - H056) in Reifenumfangsrichtung, die von der Lochpositionsidentifikationseinheit (2) identifiziert werden, der Position des Einsetzkopfes (23) entsprechen; und
der seitliche Antriebsmechanismus (21) den Einsetzkopf (23) in die Positionen der Spikestifteinsetzlöcher (H01 - H056) in Reifenquerrichtung bewegt, die von der Lochpositionsidentifikationseinheit (2) identifiziert werden.

7. Verfahren zur Herstellung eines bespikten Reifens (100) durch Einsetzen von Spikestiften in Spikestifteinsetzlöcher (H01 - H056), die in einem Laufflächenabschnitt eines Reifens (100) bereitgestellt sind, wobei das Verfahren die folgenden Schritte umfasst:
Messen eines Profils des Laufflächenabschnitts des Reifens (100);
Identifizieren von Positionen in Reifenumfangsrichtung und von Positionen in Reifenquerrichtung der Spikestifteinsetzlöcher (H01 - H056) auf Basis des gemessenen Profils;
Einsetzen von Spikestiften in die Spikestifteinsetzlöcher (H01 - H056), deren Positionen identifiziert sind;
Drehen des Laufflächenabschnitts in Reifenumfangsrichtung; wobei
in dem Profilmessschritt ein gesamtes Profil des Laufflächenabschnitts gemessen wird, indem das Profil des Laufflächenabschnitts in Reifenquerrichtung gemessen wird, während sich der Laufflächenabschnitt in Drehung befindet, **dadurch gekennzeichnet, dass**
in dem Profilmessschritt das gesamte Profil des Laufflächenabschnitts zweimal gemessen wird, indem das Profil des Laufflächenabschnitts in Reifenquerrichtung gemessen wird, während sich der Laufflächenabschnitt in Drehung befindet;
der Einsetzschritt von der Messeinheit nach der ersten Messung des gesamten Profils des Laufflächenabschnitts und vor der zweiten Messung durchgeführt wird; und das Verfahren ferner den folgenden Schritt umfasst:
Bestimmen, ob Spikestifte in die Spikestifteinsetzlöcher (H01 - H056) eingesetzt wurden oder nicht, indem das gesamte Profil des Laufflächenabschnitts aus der ersten Messung mit dem gesamten Profil des Laufflächenabschnitts aus der zweiten Messung verglichen wird; wobei
in dem Profilmessschritt die erste Messung in einer Reifendrehrichtung vor einer Einsetzposition der Spikestifte durchgeführt wird und die zweite Messung in der Drehrichtung des Reifens (100) hinter der Einsetzposition der Spikestifte durchgeführt wird.

8. Verfahren zur Herstellung eines bespikten Reifens (100) nach Anspruch 7, wobei
in dem Lochpositionsidentifikationsschritt die Positionen in Reifenumfangsrichtung und die Positionen in Reifenquerrichtung der Spikestifteinsetzlöcher (H01 - H056) in einem Bereich des Laufflächenabschnitts, in dem das Profil gemessen wird, identifiziert werden, während der Laufflächenabschnitt in Drehung ist.

9. Verfahren zur Herstellung eines bespikten Reifens (100) nach Anspruch 7 oder 8, wobei
der Laufflächenabschnitt im Drehschritt in Reifenumfangsrichtung für mindestens zwei volle Umdrehungen gedreht wird; und
im Profilmessschritt die erste Messung für die erste volle Drehung des Laufflächenabschnitts und die zweite Messung für die zweite volle Drehung des Laufflächenabschnitts erfolgen.

10. Verfahren zur Herstellung eines bespikten Reifens (100) nach einem der Ansprüche 7 bis 9, wobei
im Lochpositionsidentifikationsschritt die Positionen in Reifenumfangsrichtung und Positionen in Reifenquerrichtung der Spikestifteinsetzlöcher (H01 - H056) identifiziert werden, indem ein Musterabgleich in Bezug auf Informationen über das Profil des Laufflächenabschnitts des Reifens (100), die im Profilmessschritt gemessen wurden, und auf Informationen über eine Form der Spikestifteinsetzlöcher (H01 - H056), die in einem Computer gespeichert sind, durchgeführt wird.

## Revendications

1. Dispositif d'insertion (1) pour insérer des clous dans des trous d'insertion de clou (H01 - H056) pourvus dans une partie de bande de roulement d'un pneu (100), le dispositif d'insertion (1) comprenant :
une unité de mesure de profil (2) comprenant un premier dispositif de mesure de profil qui mesure un profil de la partie de bande de roulement du pneu (100) ;
une unité d'identification de position de trou (2) qui identifie des positions dans une direction circonférentielle du pneu et des positions dans une direction latérale du pneu des trous d'insertion de clou (H01 - H056) sur la base du profil mesuré ; et une unité d'insertion (20) qui insère les clous dans les trous d'insertion de clou (H01 - H056), dont les positions sont identifiées ; dans lequel
l'unité d'insertion (20) comprend un mécanisme de rotation (12) qui fait tourner la partie de bande de roulement dans la direction circonférentielle du pneu ; et
le premier dispositif de mesure de profil mesure un profil entier de la partie de bande de roulement en mesurant le profil de la partie de bande de roulement dans la direction latérale du pneu alors que la partie de bande de roulement est en rotation, **caractérisé en ce que**
l'unité de mesure (2) comprend un deuxième dispositif de mesure de profil qui mesure le profil de la partie de bande de roulement dans la direction latérale du pneu ;
une position d'insertion où des clous sont insérés par l'unité d'insertion (20) est définie entre une première position de mesure où le premier dispositif de mesure de profil mesure la partie de bande de roulement et une deuxième position de mesure où le deuxième dispositif de mesure de profil mesure la partie de bande de roulement ;
le mécanisme de rotation (12) fait tourner la partie de bande de roulement dans une direction allant de la première position de mesure vers la position d'insertion ;
l'unité d'insertion (20) insère des clous dans les trous d'insertion de clou (H01 - H056) après que le premier dispositif de mesure de profil mesure le profil de la partie de bande de roulement et avant que le deuxième dispositif de mesure de profil mesure le profil de la partie de bande de roulement ; et
l'unité d'identification de position de trou (2) détermine si des clous ont été insérés ou non dans les trous d'insertion de clou (H01 - H056) en comparant le profil entier de la partie de bande de roulement mesuré par le premier dispositif de mesure de profil et le profil entier de la partie de bande de roulement mesuré par le deuxième dispositif de mesure de profil.

2. Dispositif d'insertion (1) selon la revendication 1, dans lequel
l'unité d'identification de position de trou (2) identifie les positions dans la direction circonférentielle du pneu et les positions dans la direction latérale du pneu des trous d'insertion de clou (H01 - H056) dans une région de la partie de bande de roulement où le profil est mesuré pendant que la partie de bande de roulement est en rotation.

3. Dispositif d'insertion (1) selon la revendication 1 ou 2, dans lequel
le mécanisme de rotation (12) fait tourner la partie de bande de roulement dans la direction circonférentielle du pneu pendant au moins deux rotations complètes ;
le premier dispositif de mesure de profil mesure le profil entier de la partie de bande de roulement deux fois en mesurant le profil de la partie de bande de roulement dans la direction latérale du pneu alors que la partie de bande de roulement est en rotation ;
l'unité d'insertion (20) insère des clous dans les trous d'insertion de clou (H01 - H056) après la première mesure du profil entier de la partie de bande de roulement et avant la deuxième mesure ; et
l'unité d'identification de position de trou (2) détermine si des clous ont été insérés ou non dans les trous d'insertion de clou (H01 - H056) en comparant le profil entier de la partie de bande de roulement de la première mesure et le profil entier de la partie de bande de roulement de la deuxième mesure.

4. Dispositif d'insertion (1) selon l'une quelconque des revendications 1 à 3, dans lequel
des informations sur une forme des trous d'insertion de clou (H01 - H056) sont stockées dans une unité d'identification de position de trou (2) ; et
l'unité d'identification de position de trou (2) identifie les positions dans la direction circonférentielle du pneu et les positions dans la direction latérale du pneu des trous d'insertion de clou (H01 - H056) en effectuant une correspondance de motif sur des informations sur le profil de la partie de bande de roulement de pneu (100) mesuré par l'unité de mesure de profil (2) et des informations sur la forme des trous d'insertion de clou (H01 - H056).

5. Dispositif d'insertion (1) selon l'une quelconque des revendications 1 à 4, dans lequel
l'unité d'insertion (20) comprend un mécanisme de rotation (12) qui fait tourner la partie de bande de roulement dans la direction circonférentielle du pneu, une tête d'insertion (23) qui insère des clous dans les trous d'insertion de clou (H01 - H056), un mécanisme d'entraînement latéral (21) qui ajuste une position de la tête d'insertion (23) par rapport à la partie de bande de roulement dans la direction latérale du pneu, et un mécanisme d'entraînement radial (22) qui ajuste une distance de la tête d'insertion (23) à partir de la partie de bande de roulement dans une direction radiale de pneu.

6. Dispositif d'insertion (1) selon la revendication 5, dans lequel
le mécanisme de rotation (12) fait tourner la partie de bande de roulement de sorte que les positions dans la direction circonférentielle du pneu des trous d'insertion de clou (H01 - H056) identifiées par l'unité d'identification de position de trou (2) correspondent à la position de la tête d'insertion (23) ; et
le mécanisme d'entraînement latéral (21) déplace la tête d'insertion (23) vers les positions dans la direction latérale du pneu des trous d'insertion de clou (H01 - H056) identifiées par l'unité d'identification de position de trou (2).

7. Procédé de fabrication d'un pneu clouté (100) en insérant des clous dans des trous d'insertion de clou (H01 - H056) pourvus dans une partie de bande de roulement d'un pneu (100), le procédé comprenant les étapes consistant à :
mesurer un profil de la partie de bande de roulement du pneu (100) ;
identifier des positions dans une direction circonférentielle du pneu et des positions dans une direction latérale du pneu des trous d'insertion de clou (H01 - H056) sur la base du profil mesuré ;
insérer des clous dans les trous d'insertion de clou (H01 - H056), dont les positions sont identifiées ;
faire tourner la partie de bande de roulement dans la direction circonférentielle ; dans lequel
dans l'étape de mesure du profil, un profil entier de la partie de bande de roulement est mesuré en mesurant le profil de la partie de bande de roulement dans la direction latérale du pneu alors que la partie de bande de roulement est en rotation, **caractérisé en ce que**
dans l'étape de mesure du profil, le profil entier de la partie de bande de roulement est mesuré deux fois en mesurant le profil de la partie de bande de roulement dans la direction latérale du pneu alors que la partie de bande de roulement est en rotation ;
l'étape d'insertion est effectuée après la première mesure du profil entier de la partie de bande de roulement par l'unité de mesure et avant la deuxième mesure ; et le procédé comprend en outre l'étape consistant à
déterminer si des clous ont été insérés ou non dans les trous d'insertion de clou (H01 - H056) en comparant le profil entier de la partie de bande de roulement de la première mesure et le profil entier de la partie de bande de roulement de la deuxième mesure ; dans lequel
dans l'étape de mesure du profil, la première mesure est effectuée en amont dans une direction de rotation du pneu d'une position d'insertion des clous et la deuxième mesure est effectuée en aval dans la direction de rotation du pneu (100) de la position d'insertion des clous.

8. Procédé de fabrication d'un pneu clouté (100) selon la revendication 7, dans lequel
dans l'étape d'identification de position de trou, les positions dans la direction circonférentielle du pneu et les positions dans la direction latérale du pneu des trous d'insertion de clou (H01 - H056) dans une région de la partie de bande de roulement où le profil est mesuré sont identifiées alors que la partie de bande de roulement est en rotation.

9. Procédé de fabrication d'un pneu clouté (100) selon la revendication 7 ou 8, dans lequel
dans l'étape de rotation, la partie de bande de roulement est tournée dans la direction circonférentielle du pneu pendant au moins deux rotations complètes ; et
dans l'étape de mesure du profil, la première mesure est pour la première rotation complète de la partie de bande de roulement et la deuxième mesure est pour la deuxième rotation complète de la partie de bande de roulement.

10. Procédé de fabrication d'un pneu clouté (100) selon l'une quelconque des revendications 7 à 9, dans lequel
dans l'étape d'identification de position de trou, les positions dans la direction circonférentielle du pneu et les positions dans la direction latérale du pneu des trous d'insertion de clou (H01 - H056) sont identifiées en effectuant une correspondance de motif sur des informations sur le profil de la partie de bande de roulement de pneu (100) mesuré dans l'étape de mesure de profil et des informations sur une forme des trous d'insertion de clou (H01 - H056) stockées dans un ordinateur.
